# EUROPEAN PATENT APPLICATION

(11) **EP 2 469 670 A1**
(43) Date of publication of application: **27.06.2012**
(21) Application number: 11195034.1
(22) Date of filing: 21.12.2011
(51) Int. Cl.: H02G 1/00, B25C 3/00

(54) **Mounting tool for cable clamps**

(30) Priority: 21.12.2010 SE 1051352
(71) Applicant: Schneider Electric Industries SAS, 92500 Rueil-Malmaison (FR)
(72) Inventor: Sundin, Lars, 613 37 Oxelösund (SE); Sundström, Inge, 611 45 Nyköping (SE); Lindqvist, Lars, 611 32 Nyköping (SE)
(74) Representative: Löfgren, Håkan Bengt Alpo

(57) **Abstract**

Mounting tool (10, 30) for cable clamps (15), which tool comprises an elongate mandrel (11) provided with an impact end (12) for the application of impacts along an imaginary impact axis (25) and a clamp contact end (13) that is formed opposite the impact end (12) and, on the occasion of mounting, arranged to abut against a cable clamp (15) provided with a nail (51), wherein the clamp contact end (13) of the mandrel (11) is formed with a clamp seat (22), which comprises a nail support part (23) having a nail support surface (61) oriented parallel to said impact axis (25) and a clamp surface (62) formed to abut against the clamp (15).

## Description

### Technical Field

The present invention relates to the area of the installation of electrically conducting cables in spaces where mounting is difficult, such as internal corners where a cable clip should be nailed in the corner to attach the cable.

### Background of the Invention

The tool is used in combination with the type of cable clamps that are provided with a nail and which are nailed when mounting the clamp. Such clamps having a nail are usually of three different designs, *viz.* a small round clamp, a great round clamp and a clamps for an oval cable. These different designs are in addition available with two different nail lengths for the three types. This implies, according to this actual example, totally six different types of clamps. Such clamps, which are provided with a nail, are used most often in corner mountings where the cable rests against, e.g., the floor/wall.

The background of the invention is, among other things, the applicant's own mounting tool for cable clamps, which mounting tool comprises a mandrel having a plane end that rests against the clamp upon mounting. Said mandrel runs freely between two end positions of a mounting sleeve used to align the clamp that the mandrel should hammer into the mounting surface or surfaces to which the cable is to be mounted. The mounting sleeve of this previously known tool is further provided with a magnet to hold the clamp before the mounting.

Said previously known mounting tool works for the most part well but tends to deform the clamp head and is difficult to align in order to get an optimum mounting. In addition, it is difficult to avoid that the clamp is turned in relation to the mandrel as well as that it is scratched when being mounted.

### The Object of the Invention

The object of the present invention is to provide an improved mounting tool for clamps that solves the above-mentioned problems.

The object is furthermore to provide a mounting tool that can be used in more different installation stages than previously known mounting tools for clamps.

### Summary of the Invention

By the present invention, as the same is seen in the independent claim, the above-mentioned objects are met, whereby said disadvantages have been eliminated. Suitable embodiments of the invention are defined in the dependent claims.

The invention concerns a new mounting tool for the nailing of clamps upon mounting of surface-mounted cable.

More precisely, the invention concerns a mounting tool for cable clamps, which tool comprises an elongate mandrel provided with an impact end for the application of impacts along an imaginary impact axis and a clamp contact end formed opposite the impact end. This latter end is, on the occasion of mounting, arranged to abut against a cable clamp provided with a nail. The mandrel is formed so that its clamp contact end forms a clamp seat, which comprises a nail support part having a nail support surface. The nail support surface is oriented parallel to said impact axis. The clamp seat comprises in addition a clamp surface formed to abut against a clamp placed in the clamp seat. The clamp seat in the mandrel means that the clamp placed in the seat can be kept in position during the mounting in order to, to in such a way, get a more secure and precise mounting. The clamp seat aims, to a greater extent than previously, at supporting the clamp on the occasion of mounting so that the clamp does not turn or tilt in any direction. This contributes to obtaining an exact mounting of the clamp at each mounting occasion.

In one embodiment of the invention, the mandrel is formed so that the centre of the impact end of the mandrel is lying on an imaginary impact axis that extends through the clamp contact end of the mandrel and centrally through the centre of the nail of the clamp placed in the seat. By this design, the tilting torque on the clamp is largely eliminated in the mounting.

In one embodiment of the invention, the clamp seat is, on the opposite side in relation to the nail support part, provided with a protruding anvil that keeps the front edge of the clamp in position and then the entire clamp in the clamp seat. Said anvil contributes also to keeping the clamp in position on the occasion of mounting and in such a way getting an exact mounting.

In one embodiment of the invention, the anvil of the mandrel is provided with an outer angled support surface, and that the end of the nail support part is formed with an angled lower support surface, the angle between said support surfaces being 90°. These support surfaces are formed to be able to abut against surfaces in the internal corner of which the cable is to be mounted. The support surfaces are arranged at a certain angle in relation to the surfaces of the corner so that the impact axis of the tool should be able to be outwardly angled from the surfaces of the corner, in order to thereby facilitate the mounting of the clamp.

In one embodiment of the invention, the angle between the impact axis and the lower support surface is 70°-80°, preferably 75°. This angle interval is judged to be the optimal one to obtain a comfortable impact angle.

In one embodiment of the invention, the nail support part is provided with a magnet to hold the clamp in a position for mounting. Said magnet facilitates the mounting and collection as well as loading of new clamps into the tool.

In one embodiment of the invention, the mandrel is provided with an alignment sleeve formed with a bore in which the mandrel can run along its impact axis in a rotationally secure way. Said alignment sleeve facilitates the mounting in spaces with good access, and means that each clamp will become exactly equally mounted.

In one embodiment of the invention, the bore of the alignment sleeve is provided with a brake in order to avoid that the mandrel slides out of the alignment sleeve. Thus, the brake contributes to the mandrel not being dropped.

In one embodiment of the invention, the alignment sleeve is formed with a first contact surface, which is parallel to the outer angled support surface of the anvil of the mandrel. Again, said surfaces contribute to the alignment of the mandrel upon mounting in order to get an optimum mounting.

In one embodiment of the invention, the alignment sleeve is formed with a second contact surface, which is parallel to the angled lower support surface of the nail support part of the mandrel. In the cases the mounting of a thin cable is to be made, this support surface will abut against one of the mounting surfaces, and a steadier mounting position of the clamp can be achieved.

In one embodiment of the invention, the alignment sleeve is provided with a cable gripping recess in the area of the clamp seat of the mandrel. This recess means that the cable can be manoeuvred into the correct position for the mounting of the clamp.

The alignment sleeve rests against the wall upon mounting and at best also against the floor. The alignment sleeve and the mandrel control the direction of the clamp so that the mounting becomes equal from clamp to clamp. In the alignment sleeve, there is, as mentioned, a brake that holds the mandrel in the correct position in the loading of a clamp and brakes the mandrel from falling out of the alignment sleeve.

The solution with a brake in the alignment sleeve allows a replacement of a mandrel for a mandrel of another design for the nailing of another clamp dimension. In solutions with previously known mechanical stops, this is not possible. The brake is formed in the alignment sleeve as a friction brake, which is made in the material without extra parts. The alignment sleeve may be manufactured from plastic and be integrally injection-moulded. The brake may also be formed with magnets inserted in the alignment sleeve, which magnets hold the mandrel in the correct position in operation and also allow replacement of mandrel.

The mandrel may be manufactured from hardened steel in, e.g., two different designs, where one design suits small clamps and where the other design suits greater clamps. Only the position of the clamp will then be different for the two mandrels. Thereby, the same alignment sleeve can be used for the two variants.

The clamp seat for the clamp is formed to hold the clamp in the correct position upon fixation and counteract that the clamp is bent inward toward the wall. Such a bending is counteracted by the mandrel being formed with a protruding anvil that holds the front edge of the clamp and prevents bending of the clamp.

In the mandrel at the back of the clamp, there is a magnet installed to hold the clamp in the correct position during the initial positioning of the clamp/tool.

The conically shaped impact part of the mandrel is centred with the nail centre of the clamp. This is in order to decrease the torque that aims to bend the clamp.

Upon mounting of a clamp, the same is positioned in the correct position in the end of the mandrel. The magnet holds the clamp in the correct position. The magnetized mandrel may also be used to collect clamps from the package of clamps. The mandrel, including the clamp and the alignment sleeve, is positioned in the correct position on the cable. The clamp is then nailed into the substrate. Then, a new clamp can be loaded and the mounting is repeated.

After the nail of the clamp having been knocked in some millimetres, the alignment sleeve, which guides the clamp and the mandrel into the correct position, can be pulled off from the mandrel and thereby making it possible to see and check the continued knocking-in of the clamp.

Alternatively, solely the mandrel, without the guiding alignment sleeve, may be used for the driving-in of the clamp. This is especially important in cumbersome and sensitive positions where it is then possible to see and check the driving-in of the clamp from the beginning to the end.

### Brief Description of the Drawings

Now, the invention will be described in more detail, reference being made in connection with the accompanying drawing figures. The drawing figures show only explanatory sketches intended to facilitate the understanding of the invention.
- Figure 1: shows in perspective a mounting using a mounting tool according to a first embodiment of the invention.
- Figure 2: shows a side view of the mounting according to Figure 1.
- Figure 3: shows in perspective a mounting using a mounting tool according to a second embodiment of the invention.
- Figure 4: shows a side view of the mounting according to Figure 3.
- Figure 5: shows in perspective the mounting tool according to Figure 3.
- Figure 6: shows a side view of the mounting tool according to Figure 5.
- Figure 7: shows a section view through an outer part of the mounting tool according to Figures 3, 4, 5 and 6.
- Figure 8: shows a front view of the mounting tool according to Figures 1 and 2.
- Figure 9: shows a side view of the mounting tool according to Figure 8.
- Figure 10: shows an enlargement of the encircled part in Figure 9 of one end of the mounting tool.
- Figure 11: shows an alternative embodiment of the encircled part in Figure 9.

### Description of the Invention

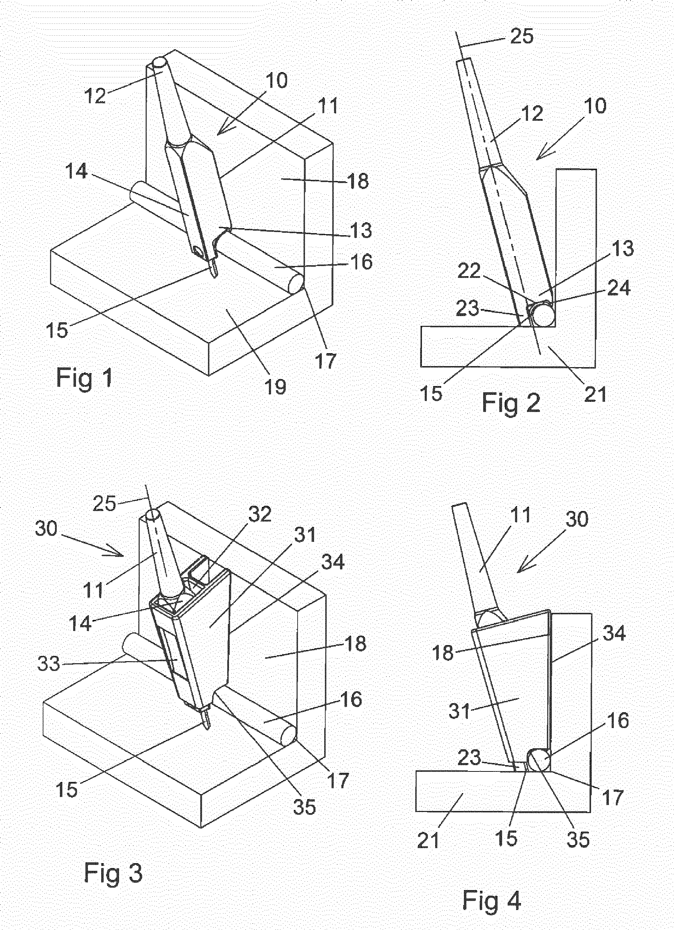

Figure 1 shows the use of a mounting tool 10 according to the invention, which tool in this shown first embodiment consists of an elongate mandrel 11 comprising conical impact end 12 having a circular cross-section and having a clamp contact end 13 situated on a rectangularly cross-sectioned mandrel body 14 and opposite the impact end 12. The figure shows a mounting state where the tool has been loaded with a clamp 15 in order to, by means of the tool, be placed over a cable 16 in a corner 17 between, for instance, a wall surface 18 and a floor surface 19.

Figure 2 shows from the side how the clamp 15, by means of the tool, 10 has been hit into the floor 21. The clamp contact end 13 is provided with a clamp seat 22 comprising a nail support part 23 and an anvil 24. In this connection, the clamp seat is formed to reliably hold the clamp in the tool in an initial mounting stage. The clamp seat 22 is formed so that the nail of the inserted clamp 15 is oriented in line with an imaginary impact axis 25 of the tool 10, which axis extends centrally through the conical impact end 12.

Figure 3 shows a second embodiment of a mounting tool 30, which comprises the mandrel 11 described above but also comprises an alignment sleeve 31 provided with a bore 32 in which the mandrel 11 is secured rotationally by the bore with the inside thereof corresponding in shape to the outer shape of the rectangular mandrel body 14. The mandrel 11 can be axially displaced to and fro in the bore 32 along the imaginary impact axis 25. The bore of the alignment sleeve is provided with a brake 33 in the form of a curved-in sleeve part. The embodiment according to the figure shows a corresponding mounting state as in Figure 1 but in which the alignment sleeve 31 according to this embodiment on one hand rests against the wall surface 18 with a first contact surface 34 and on the other hand rests against the cable 16 with a cable gripping recess 35. The recess entails that the cable 16 can be pressed inward toward the corner 17 when mounting the clamp 15. Thus, the alignment sleeve is used to press in the cable in the corner and is simultaneously a guide for the mandrel.

Figure 4 shows from the side how the clamp 15, by means of the tool 30, has been hit into the floor 21. In this mounting, the first contact surface 34 of the alignment sleeve 31 connects to the wall surface 18 and the recess 35 holds the cable 16 inward toward the corner 17. As seen in the figure, the nail support part 23 of the mandrel 11 projects from the alignment sleeve when the clamp 15 is entirely driven into the floor 21.

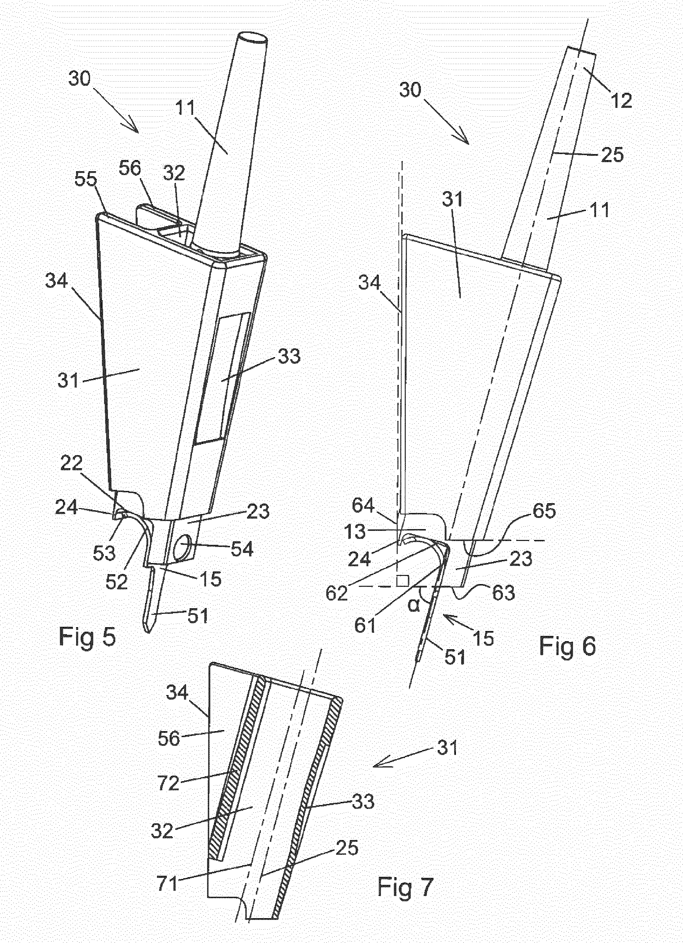

Figure 5 shows an enlargement of the mounting tool 30 in Figure 3 including its mandrel 11 and its alignment sleeve 31. The mandrel 11 is shown pushed down so far in the alignment sleeve 31 that the nail support part 23 with the clamp seat 22 thereof is clearly shown. A clamp 15 with its nail 51 and its curved cable holding part 52 is inserted in the clamp seat 22. The curving end 53 of the clamp 15 rests against the anvil 24 in the clamp seat 22, and rests also against the nail support part 23 and is held against its surface by means of a magnet 54 in the nail support part 23. Also the brake 33 is visible from the outside of the alignment sleeve 31. In this embodiment, the first contact surface 34 of the alignment sleeve is formed of two sleeve wings 55, 56 projecting from the bore 32.

Figure 6 shows the tool 30 in Figure 5 from the side, the mandrel's 11 imaginary impact axis 25 through the impact end 12 and the clamp contact end 13 coinciding with the centre of the nail 51 of the clamp 15. The nail support part 23 of the mandrel in the clamp seat 22 is provided with a nail support surface 61, which is oriented in parallel in relation to the impact axis 25. In addition, the clamp seat is provided with a clamp support surface 62. The end of the nail support part 23 is provided with a plane angled lower support surface 63, which is oriented at the angle α in the interval of 70°-80° to the impact axis 25, preferably, said angle is 75°. The anvil 24 of the mandrel is provided with an outer angled plane support surface 64, which is parallel to the first contact surface 34 of the alignment sleeve 31 indicated by the dashed lines in the figure. As is shown in the figure, the lower support surface 63 of the nail support part 23 is oriented at the angle 90° to the outer support surface 64 of the anvil. The alignment sleeve is furthermore provided with a second contact surface 65, which is parallel to the lower support surface 63 of the mandrel running in the sleeve. These two support surfaces of the alignment sleeve allow a support to the substrate in certain types of mounting.

Figure 7 shows a section through the alignment sleeve 31 of the tool with one of its sleeve wings 56 including its first contact surface 34, its bore 32 and the centre axis 71 of the bore. In the figure, also the impact axis 25 has been indicated and it is lying beside the centre axis of the bore, which means that the mandrel is asymmetrically shaped. The figure shows also the brake 33 of the bore 32 that is formed as an outer wall part curving inward in the bore, which wall part presses the mandrel against the opposite inner wall part 72 of the bore.

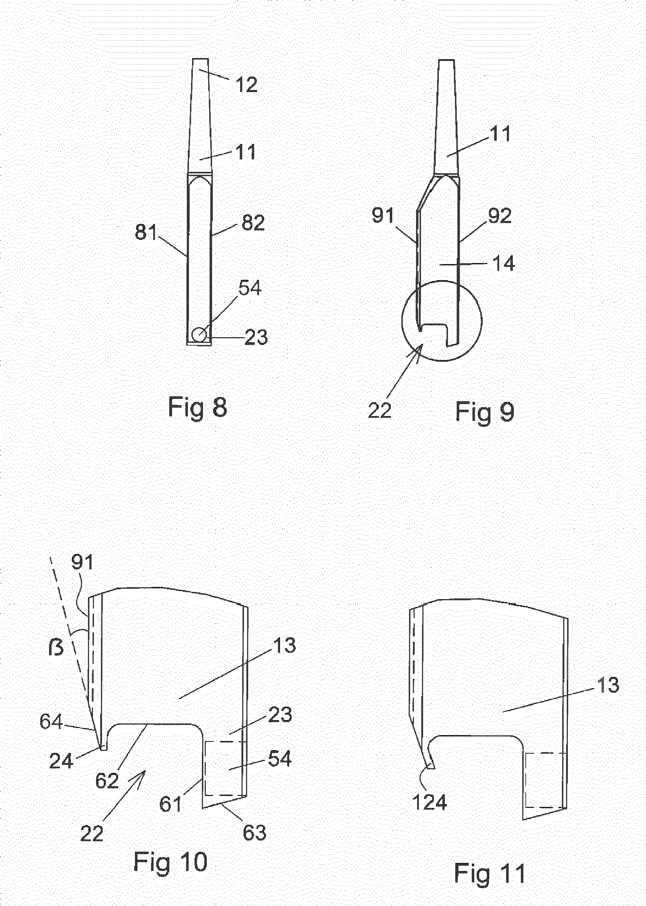

Figure 8 shows the mandrel 11 according to the mounting tool of the first embodiment from the front side with its conically shaped impact end 12 and its parallel side surfaces 81, 82. On the front side, also the magnet 54 is placed in the nail support part 23 of the mandrel.

Figure 9 shows the mandrel 11 according to Figure 8 from the side with its clamp seat 22 and its parallel side surfaces 91, 92. By Figures 8 and 9, it is shown that the mandrel body 14 of the mandrel has a rectangular cross-section, the mandrel body mating in a rectangular bore corresponding to the one shown in Figure 7. By this design of the mandrel and the bore, a rotational securing of the mandrel in the bore is obtained. This means that the mandrel in itself may constitute a mounting tool of a first embodiment but also that the mandrel in combination with the alignment sleeve may constitute a mounting tool of a second embodiment. In the shown embodiments, the geometry of the mandrel is identical and can accordingly also be used separately without an alignment sleeve. In other feasible embodiments, the mandrel may be locked inside the alignment sleeve.

Figure 10 shows an enlargement of the encircled part in Figure 9 with the clamp seat 22 of the clamp contact end 13. The nail support surface 61 and clamp support surface 62 of the clamp seat and the anvil 24 are clearly seen in the figure. The outer plane angled support surface 64 of the anvil 24 is oriented at the angle β in the interval of 10°-20°, preferably 15°, in relation to the plane side surface 91 of the mandrel. The figure shows also the plane angled lower support surface 63 of the nail support part 23 and an indication of where the magnet 54 is placed.

Figure 11 shows an alternative embodiment of the clamp contact end 13 in which an anvil 124 curved inward toward the clamp seat is arranged. Said anvil has a greater clamping effect than a straight anvil and may therefore be preferable in certain mounting situations.

Also embodiments having a concave clamp support surface in the clamp seat instead of the plane clamp support surface shown are feasible within the scope of the invention. Furthermore, embodiments having clamp seats the surfaces of which entirely connect to the upper end of a clamp are feasible within the scope of the invention.

## Claims

1. Mounting tool (10, 30) for cable clamps (15), which tool comprises an elongate mandrel (11) provided with an impact end (12) for the application of impacts along an imaginary impact axis (25) and with a clamp contact end (13) that is formed opposite the impact end (12) and, on the occasion of mounting, arranged to abut against a cable clamp (15) provided with a nail (51), **characterized in that** the clamp contact end (13) of the mandrel (11) is formed with a clamp seat (22), which comprises a nail support part (23) having a nail support surface (61) oriented parallel to said impact axis (25) and a clamp surface (62) formed to abut against the clamp (15).

2. Tool according to claim 1, **characterized in that** the clamp seat (22), on the opposite side in relation to the nail support part (23), is provided with a protruding anvil (24) that keeps the front edge (53) of the clamp in position and then the entire clamp (15) in the clamp seat (22).

3. Tool according to claim 2, **characterized in that** the anvil (24) of the mandrel (11) is provided with an outer angled support surface (64), that the end of the nail support part (23) is formed with an angled lower support surface (63), the angle between said support surfaces (63, 64) being 90°.

4. Tool according to any one of claims 1-3, **characterized in that** said mandrel (11) is formed so that the centre of the impact end (12) of the mandrel (11) is lying on the impact axis (25) that extends centrally through the clamp contact end (13) of the mandrel (11) and through the centre of the nail (51) of a clamp (15) placed in the clamp seat (22) of the mandrel (11).

5. Tool according to any one of claim 3-4, **characterized in that** the angle α between the impact axis (25) and the lower support surface (63) is 70°-80°, preferably 75°.

6. Tool according to any one of claims 1-5, **characterized in that** the nail support part (23) is provided with a magnet (54) to hold the clamp (15) in position for mounting.

7. Tool according to any one of claims 1-6, **characterized in that** the mandrel (11) is provided with an alignment sleeve (31) formed with a bore (32) in which the mandrel (11) can run along its impact axis (25) in a rotationally secure way.

8. Tool according to claim 7, **characterized in that** the bore (32) of the alignment sleeve (31) is provided with a brake (33) in order to avoid that the mandrel (11) slides out of the alignment sleeve (31).

9. Tool according to any one of claims 7-8, **characterized in that** the alignment sleeve (31) is formed with a first contact surface (34), which is parallel to the outer angled support surface (64) of the anvil (24) of the mandrel (11).

10. Tool according to claim 9, **characterized in that** the alignment sleeve (31) is formed with a second contact surface (65), which is parallel to the angled lower support surface (63) of the nail support part (23) of the mandrel (11) running in the alignment sleeve (31).

11. Tool according to any one of claims 7-10, **characterized in that** the alignment sleeve (31) is provided with a cable gripping recess (35) in the area of the clamp seat (22) of the mandrel (11).
